# EUROPEAN PATENT APPLICATION

(11) **EP 4 697 295 A2**
(43) Date of publication of application: **18.02.2026**
(21) Application number: 25173777.1
(22) Date of filing: 30.04.2025
(51) Int. Cl.: G08B 13/196, G08B 13/19, G08B 29/18

(54) **INTRUDER DETECTION SYSTEM**

(30) Priority: 30.04.2024 GB 202406093
(71) Applicant: Rugged Networks Limited, Barnstaple Devon EX31 3LG (GB)
(72) Inventor: Withecombe, Jake, Barnstaple, EX31 3LG (GB)
(74) Representative: Valet Patent Services Limited

(57) **Abstract**

An intruder detection system in a portable tower arrangement, the intruder detection system comprising: a housing; a battery included within the housing; a motion sensor mounted to the housing; a controller included within the housing; a camera included in the housing; and a controller configured to maintain a low power sleep mode in which the camera draws relatively little or no power from the battery, and to switch to a higher power detection mode when the motion sensor detects an intruder, the controller configured to activate the camera in the detection mode to capture video data.

## Description

### FIELD OF THE INVENTION

The present disclosure relates to the field of electronic security systems, specifically to a portable intruder detection system, particularly in outdoor environments like construction sites.

### BACKGROUND OF THE INVENTION

In the field of electronic security systems, particularly those deployed in challenging and temporary outdoor environments like construction sites where portability is paramount, various challenges persist in effectively detecting and managing security threats. Some traditional systems rely on video surveillance technologies that may struggle with high power consumption and limited real-time processing capabilities.

In one known system, security devices are equipped with sensors and cameras designed to monitor and record environmental activities. However, these systems frequently depend on external power sources or bulky battery units, which can compromise their efficiency and ease of deployment. Additionally, some known systems lack the capability to distinguish between different types of intrusions effectively, leading to high rates of false alarms and unnecessary alerts and power hungry operation. Since the detection system should be portable and temporary in many cases, solar rather than cabled power is desirable but this presents challenges for effective operation.

Moreover, such systems may require manual configuration and maintenance, which can be cumbersome and time-consuming. The reliance on conventional power solutions and the lack of integrated, intelligent processing capabilities pose limitations on the effectiveness and adaptability of existing security solutions in outdoor environments.

There is thus a need for systems and methods for low power consumption, solar charged battery and effective intruder detection systems that overcome problems with prior art systems.

### BRIEF SUMMARY OF THE INVENTION

The above mentioned and other features and advantages of the disclosure will be best understood from the following description referring to the attached drawings. In the drawings, like reference numerals denote identical parts or parts performing an identical or comparable function or operation.

In a first aspect, an intruder detection system in a portable tower arrangement is provided. The intruder detection system comprising: a housing; a battery included within the housing; a motion sensor mounted to the housing; a controller included within the housing; a camera included in the housing; and a controller configured to maintain a low power sleep mode in which the camera draws relatively little or no power from the battery, and to switch to a higher power detection mode when the motion sensor detects an intruder, the controller configured to activate the camera in the detection mode to capture video data.

In a second aspect, an intruder detection system is provided, comprising: a housing including a lower section and an upper section; the lower section including a battery for powering an alarm system of the intruder detection system and at least one camera of the intruder detection system; the upper section including at least one motion sensor; the upper section having a hinge connection relative to the lower section so as to allow maintenance access to the lower section.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are therefore not to be considered to be limiting of its scope, the principles herein are described and explained with additional specificity and detail through the use of the accompanying drawings in which:
FIG. 1 is a perspective view of an intruder detection system, according to embodiments of the present disclosure;
FIG. 2 is a perspective of the intruder detection system according to FIG. 1 illustrating an upper section pivoted relative to a lower section, according to embodiments of the present disclosure;
FIG. 3 is a view of one side of the intruder detection system, according to embodiments of the present disclosure;
FIG. 4 illustrates an isolated view of the camera section of the intruder detection, according to embodiments of the present disclosure;
FIG. 5 illustrates a lower section of the intruder detection system, according to embodiments of the present disclosure;
FIG. 6 illustrates a an upper section of the intruder detection system, according to embodiments of the present disclosure;
FIG. 7 illustrates an internal view of the intruder detection system showing the battery, according to embodiments of the present disclosure; and
FIG. 8 illustrates a levelling leg mechanism of the intruder detection system, according to embodiments of the present disclosure.

### DESCRIPTION OF ILLUSTRATIVE EMBODIMENTS

Embodiments contemplated by the present disclosure will now be described in more detail with reference to the accompanying drawings. The disclosed subject matter should not be construed as limited to only the embodiments set forth herein. Rather, the illustrated embodiments are provided by way of example to covey the scope of the subject matter to those skilled in the art.

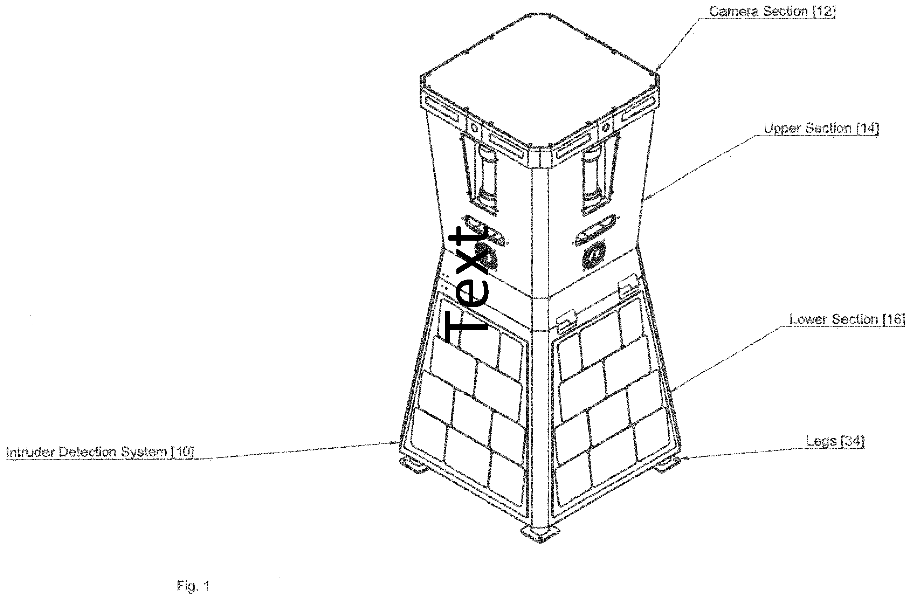

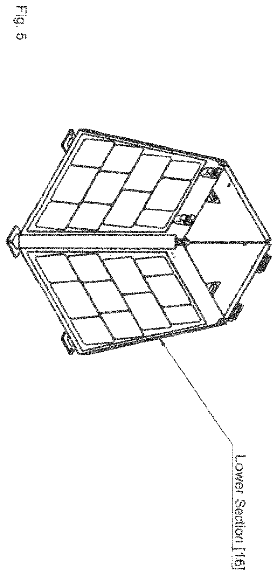

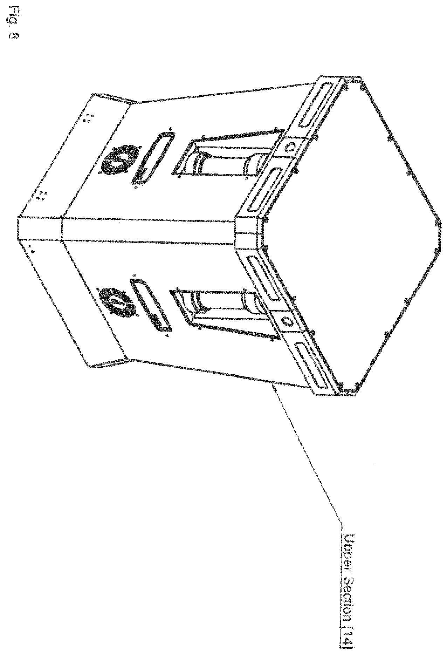

Referring to FIGS. 1 to 8, an intruder detection system 10 is illustrated. The intruder detection system 10 includes a lower section 16, an upper section 14 and a camera section 12. The lower section 16, the upper section 14 and the camera section 12 are vertically stacked with the camera section disposed above the upper section 14. The lower section 16 includes legs 34 on which the intruder detection system 10 stands.

The intruder detection system 10 has a generally four sided profile with four perpendicularly arranged sides. The lower section 16 tapers inwardly from a lower end to an upper end whilst the upper section 14 tapers outward from a lower end to an upper end. That is, the lower section 16 defines a generally truncated pyramid shape and the upper section 14 defines a generally truncated pyramid shape that is arranged upside down relative to the lower section 16.

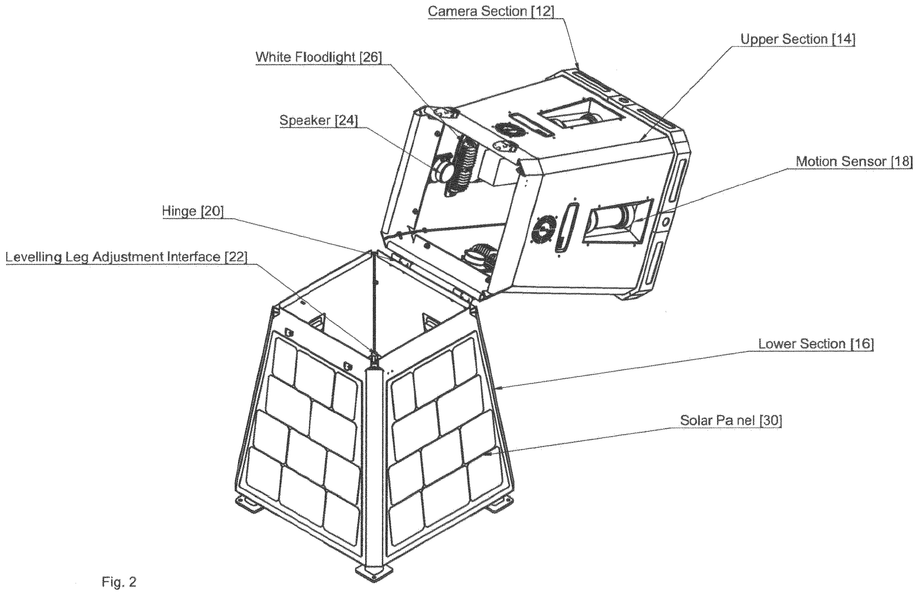

The upper section 14 is pivotably mounted to the lower section 16 as particularly shown in FIG. 2. The pivotable mounting is about a hinge 20 arranged on one side of the intruder detection system 10. The hinge 20 is gated to allow the upper section 14 to be removed from the lower section 16 during delivery. Further, the camera section 12 may be removable connected to the upper section 14.

The lower section 16 includes solar panels 30 on each side. The solar panels 30 include a plurality of solar panel tiles on each side that are arranged in a plurality of rows, each row including a plurality of solar panel tiles to suitable fit the tapering configuration of the sides of the lower section 16. Having the solar panels 30 on each converging side of the lower section 16 facilitates light harvesting.

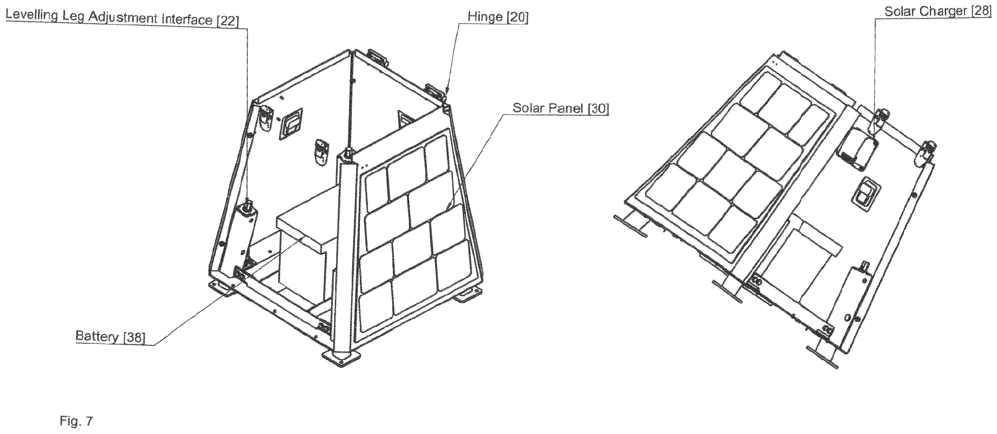

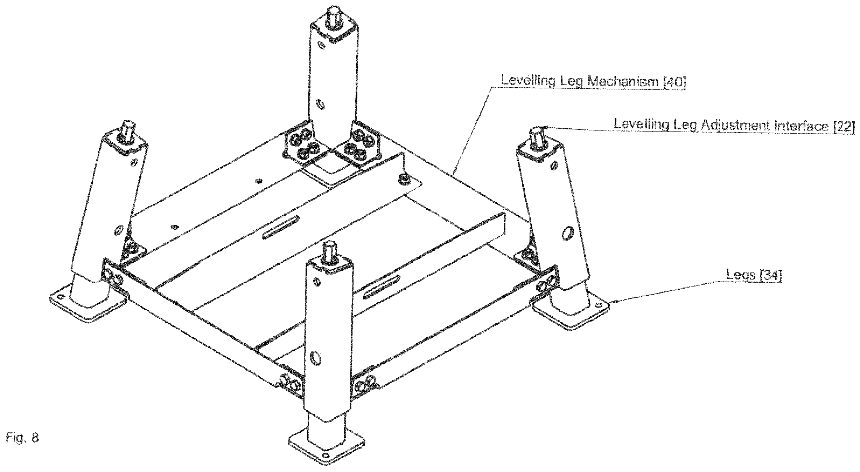

The lower section 16 additionally includes a solar controller 28 and one or more levelling leg adjustment interface 22 (e.g. a nut or other tool engagement feature for engagement with a manual tool). When the lower section 16 and the upper section 14 are relatively pivoted relative to one another, an internal volume of the lower section 16 is accessible, which facilitates maintenance. Referring to FIG. 7, a leg adjustment interface 22 and a battery 38 is exposed when the upper section 14 is pivoted. The battery 38 may thus be replaced a new battery if required. The battery 38 is charged through the solar controller 28, which directs power from the solar panels 30. Referring to FIGS. 7 and 8, the levelling leg adjustment interface 22 provides a tool interface for each leg so that the intruder detection system 10 can be maintained level relative to horizontal.

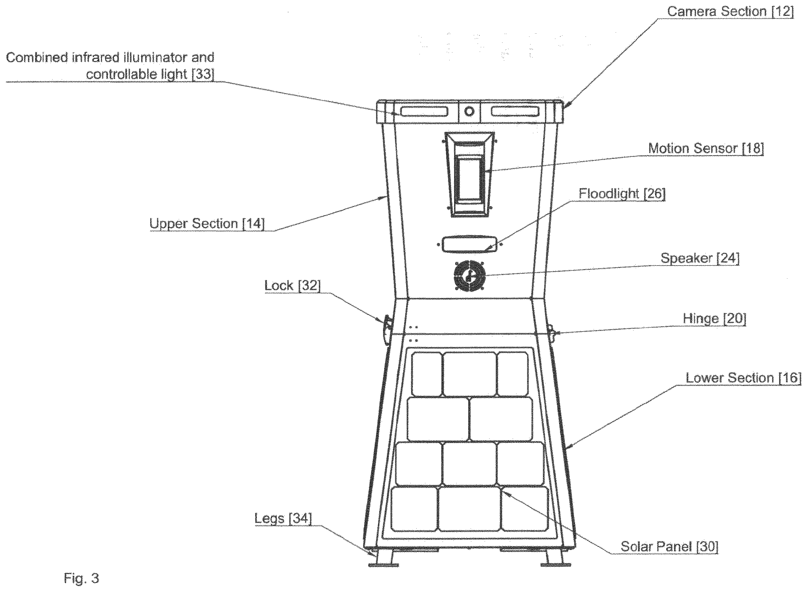

The solar controller 28, as integrated into the lower section 16 and depicted in FIGS. 1 and 3, manages the harvesting, storage, and distribution of solar energy captured by the solar panels 30. The solar controller 28 ensures optimal charging of the battery 38 by regulating the voltage and current flowing from the solar panels 30. Its sophisticated circuitry is designed to maximize the efficiency of the photovoltaic cells, regardless of variations in sunlight intensity or angle, which is particularly beneficial given the system's design to optimize the winter sun's trajectory.

With its smart monitoring capabilities, the solar controller 28 analyzes the charge status of the battery 38, depicted in FIG. 7, and adjusting the power flow accordingly to prevent overcharging or deep discharge, thus prolonging the battery's lifespan. In instances where the battery 38 is swapped, the solar controller 28 automatically recognizes the new battery's state of charge and communicates this information to the system's software (included in controller 42), ensuring that accurate data is reflected without manual intervention.

Additionally, the solar controller 28 is designed to seamlessly integrate with the PCB (controller 42) of the camera section 12. This integration allows for the real-time telemetry of the system's energy status and facilitates the 'sleep' and 'wake' functions of the controller 42 within the camera section 12. By managing power consumption and coordinating with the motion sensor 18 and camera activation, the solar controller 28 is a critical component in maintaining the energy-efficient operation of the intruder detection system 10.

Furthermore, the solar controller 28 has built-in safety features to protect against electrical anomalies such as short circuits or surges, which are essential for maintaining the integrity of the intruder detection system 10 in outdoor environments.

The lower section 16 includes a lock 32 on an opposed side from the hinge 20 (as particularly shown in FIG. 3) to secure the closed configuration of the upper section 14 relative to the lower section 16 (where the closed configuration is show in FIG. 3 and an open configuration is shown in FIG. 2).

The lower section 16 further includes legs 34 that are height adjustable to facilitate precise levelling of the intruder detection system 10.

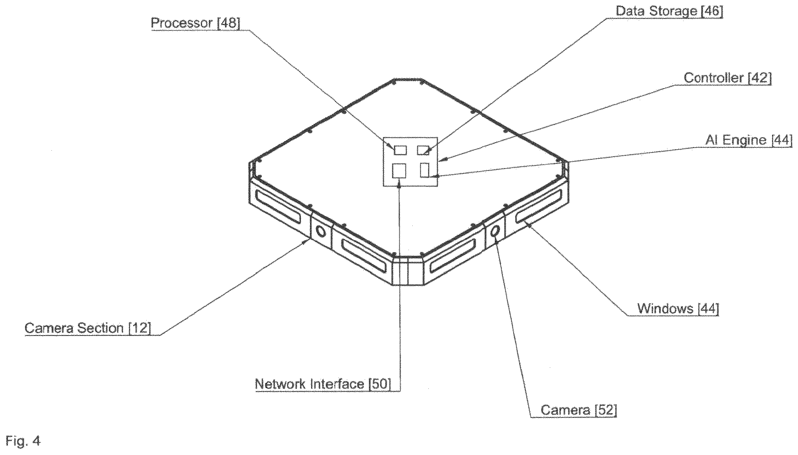

The upper section 14 includes a speaker 14, a floodlight 26 (e.g. white), a motion sensor 18 (e.g. PIR sensor). The speaker 14 and the floodlight 26 are activated in response to an alarm signal from a controller 42 (see FIG. 4), which is itself responsive to input from the motion sensor 18. The motion sensor 18 is a low power unit (relative to cameras) that detects motion and sends a motion detection signal to the controller 42. The controller 42 is responsive thereto to switch between a low power sleep mode and a detection mode. In the detection mode, cameras of the camera section 12 are activated and the image frames of video captured by the cameras are processed through an AI engine of the controller 42 to detect human intruders (and to differentiate from non-human intruder motion). If a human intruder is detected, the video is recorded on data storage 48 (see FIG. 4) and the video may be streamed to a cloud server via a network interface 50 (cellular, wired, or Wi-Fi).

The controller 42 may include a GPS module integrated within the PCB, enabling precise location tracking of the unit. This feature facilitates asset management by allowing users to monitor the real-time location of the intruder detection system 10 through a centralized software platform but also enhances security measures through geofencing capabilities. The GPS functionality permits automatic adjustment of operational parameters when the intruder detection system 10 detects movement into or out of predefined geographic zones, providing an additional layer of security by triggering alerts or adjusting detection sensitivity based on location-specific data.

The controller 42 may include a vibration and movement sensor module integrated within the PCB, enabling sensing of fine movement. This feature facilitates an early warning if a bad actor attempted to tamper with the placement of the intruder detection system. The controller 41may activate an alarm system including audible alarm via the speaker 24, and/or activation of the floodlight 26 and/or activation of the controllable light (strobe or otherwise) of the combined infrared illuminator and controllable light of the camera section 12.

Referring particularly to FIG. 4, the camera section 12 includes windows 44, a camera 52 and the controller 42. Behind the windows 44 is a combined infrared illuminator and controllable light 33. The alarm lighting may be RGB (or other colors) strobe lighting. The infrared lighting may be separate (not combined) from the alarm lighting. There may be one or more windows 44 (preferably a plurality of windows 44) on each side of the intruder detection system 10. In some embodiments, there is a plurality of strobe light emitters (e.g. 8) and a plurality of infrared light emitters (e.g. 3) associated with each window 44. Each emitter is independently controllable by the controller 42 to allow different emission patterns (in terms of colors and on and off timing). The infrared emitters allow the camera 52 to see during low lighting conditions (e.g. night). The combined infrared illuminator and controllable light 33 and the speaker 24 are activated in response to an alarm signal from the controller 42 (see FIG. 4), which is responsive to the motion sensor 18.

At night, typical visible light cameras struggle to capture useful images due to insufficient light. To address this, the intruder detection system 10 employs an infrared illuminator integrated within the combined infrared illuminator and controllable light 33. This illuminator emits infrared light, which falls outside the visible spectrum at wavelengths typically between 700 nm to 1 mm.

When the infrared light is emitted, it bathes the area in front of the cameras 50 with infrared radiation. Although invisible to humans, this light is detectable by the image sensors equipped in the cameras 50, specifically designed to be sensitive to infrared wavelengths. The reflection of this infrared light from objects within the camera's field of view is captured by these sensors.

The controller 42, in conjunction with the processor 48 and AI engine 44, processes the captured infrared images to produce clear video footage even in total darkness. The video data processed during such conditions is especially critical for security applications, as it ensures continuous monitoring without a visible light source that could alert intruders.

Moreover, the use of infrared illumination enables the intruder detection system 10 to operate unobtrusively, maintaining surveillance without drawing attention to the camera system itself. This is beneficial in scenarios where overt lighting is undesirable or may compromise the security measures in place.

A camera 52 is provided on each side of the camera section 12 to provide for surround view of the intruder detection system 10 (e.g. 360° view). The camera(s) 52 does not consume power (or consumes minimal power) until activated by a mode change signal from the controller 42, which is issued in response to a motion detection signal from the motion sensor 18. That is, the camera 52 initiates image or video capture once woken from a sleep mode to a detection mode.

The controller 42 includes data storage 46, a processor 48, an AI engine 44 and a network interface 50. The processor 48 executes computer programming instructions in order to perform the various controller functionalities described herein including the AI engine 44. The network interface 50 allow cloud uploading of capture video and real-time streaming of the video by subscribers through a cloud interface. The AI engine 44 receives video data from the camera 52 and classifies the detected motion in terms of human motion (i.e. an intruder) and other intrusion threats (e.g. a vehicle) or animal motion or other non-human intrusions (e.g. wind debris). In one embodiment, the AI engine 44 includes a convolutional neural network (CNN) that has been trained for the classification task. In one embodiment, the CNN has been specifically trained with labelled construction site video (or image) data. If an intrusion threat is detected by the AI engine 44, the controller 42, the video data from the camera(s) 52 is saved in data storage (with timestamp) and one or more users may be notified over a cellular network through the network interface 50. The controller 42 may receive a request for direct streaming in response to the one or more users requesting access as a result of the notification or the streaming may be initiated via a cloud server. Further, the video data may be uploaded to the cloud server.

**In** some known systems, a small central processing unit (CPU) is deployed, which support a maximum of two Camera Serial Interface (CSI) lanes, thus restricting the system to connecting just two cameras. The controller 42, by contrast, includes at least two CPUs within the camera section 12, thereby doubling the available CSI lanes to four, facilitating the connection of four cameras and enhancing the system's comprehensive surveillance capabilities.

These dual CPUs are configured to operate in tandem, analogous to a push-pull configuration in train systems, which not only enhances processing power but also ensures continuous system operation through built-in redundancy. Each CPU controls two CSI lanes and manages its corresponding cameras 50 independently. In the event of a failure in one CPU, the remaining CPU continues to function, maintaining system integrity and surveillance operations. This redundancy is critical for high-security areas where continuous monitoring is paramount.

Additionally, each side of the printed circuit board (PCB) within the camera section 12 is equipped with its own storage and AI processing capabilities through the AI engine 44, sharing only the network interface 50. This architecture allows for parallel processing and storage of video data, ensuring that video analytics continue uninterrupted even if one side of the PCB fails.

To further enhance system management and energy efficiency, the intruder detection system 10 includes a secondary, low-power cellular modem (as part of the network interface 50) that acts as a 'lights out' controller. This secondary modem serves a similar function to an out-of-band management interface found in server technology, allowing remote administrative access to the system's primary communication functions. It enables operators to remotely toggle the main cellular modem on or off, thereby controlling the higher power-consuming components from a remote location.

The secondary modem provides significant advantages, particularly when the in THE low power state. Operators can remotely activate the system, transitioning it to a full CCTV tower operation mode without relying on local triggers such as the motion sensor 18. This capability is crucial for situations where immediate manual intervention is necessary, or when conditions prevent the motion sensor from activating. Without the lights out controller, operators would have to wait for either the motion sensor to detect movement or for a pre-set time delay to elapse before the system could activate its surveillance functions.

Overall, the integration of dual CPUs with independent CSI lanes, redundant processing capabilities, and an innovative low-power remote management system significantly elevates the operational reliability, flexibility, and responsiveness of the intruder detection system 10, setting a new benchmark in security technology.

In an advancement to the present technology, the intruder detection system 10 integrates a high-capacity computing unit (the controller 42) within the camera section 12, a departure from some low-power microcontroller-based designs. This system harnesses hibernation technology to transition from a minimal power 'sleep' mode to a fully operational state almost instantaneously upon activation by the motion sensor 18. This capability ensures the power of a full computer is available for complex tasks such as real-time video analysis and intelligent on-site threat assessment through onboard AI (AI engine 44), providing accurate differentiation between genuine security threats and false alarms, like identifying human movements versus those of animals.

The intruder detection system 10 is a significant advancement on pod-like security products by introducing a purpose-built PCB (providing the controller 42) housed within the camera section 12, as depicted in FIG. 4. This design surpasses some conventional system in which components from residential alarm systems are amalgamated and provides refined features like GPS functionality and intricate monitoring of the battery 38 and solar panels 30. The camera modules (cameras 52) are connected directly to the PCB, enabling swift activation and energy efficiency, diverging from the standard use of power-intensive IP cameras.

The system's structural design, featuring a unique hinged connection between the upper section 14 and the lower section 16, as specifically illustrated in FIG. 2, provides numerous operational advantages. This configuration allows for easy access to the internal components, such as the battery 38, without requiring tools for entry, simplifying maintenance, and battery replacement tasks. The hinge 20, designed in a gate-like fashion, enables the upper section 14 to detach effortlessly, aligning with manual handling regulations by ensuring each half remains below a weight threshold of 25kg, for example.

The pivot point defined by the hinge 20 is located below a vertical middle of the infrared detection system 10, specifically the lower section 16 is vertically lower than a height of the upper section 14, which allows for the inclusion of a larger battery 38 within the lower section 16, maximizing operational longevity without compromising the ease of battery exchange. The considered design accommodates a battery 38 of substantial size that can be readily removed and replaced as needed, showcasing an improvement over conventional models where battery access is often restricted due to design limitations. This design enhances both the functional utility and the user accessibility of the system, providing a substantial advantage in maintenance and serviceability.

The intruder detection system 10 is equipped with built-in adjustable levelling legs 34, as highlighted in FIG. 8, ensuring stability and proper alignment of the PIR sensors (motion sensors 18) on uneven terrain. These legs 34 can be secured once the system is locked using lock 32, preventing tampering and preserving the sensor alignment. Furthermore, the leg mechanism is designed for easy adjustment, encapsulated within a flat-pack style chassis, which is assembled via simple bolt connections, minimizing transportation costs and simplifying field assembly.

In a further design enhancement, the solar panels 30, attached to each side of the lower section 16 and illustrated in FIG. 3, are positioned to optimize exposure to winter sunlight. Their distinctive shape and configuration maximize the available surface area for energy capture, supporting the system's energy autonomy.

A significant portion of the intruder detection system's 10 electronic components and operational 'brain' (the controller 42) is encased within a compact housing located within the camera section 12, as depicted across FIGS. 1, 4, and 5. This modular approach to design allows for the entire unit to be exchanged rapidly during servicing, significantly reducing downtime and simplifying repair processes. The controller section 12 design also facilitates potential future modifications, such as mounting atop a mast to elevate the camera section 12 for an expanded surveillance area, without incurring additional costs or complexities.

The intruder detection system 10 system integrates key locks (e.g. as part of lock 32) as part of its secure and user-friendly design, which is an uncommon feature in the industry and represents a notable improvement over systems requiring tools for access. Combined with a tamper sensor (now shown but its output being accessible by the controller 42), this design ensures that any unauthorized manipulation of the system, including folding, triggers an alarm (through speaker 24, floodlight 26, light(s) of combined infrared illuminator and controllable light 33) and is reported back to the monitoring software, enhancing security measures.

The system's smart battery 38, detailed in FIG. 7, interacts with the PCB (controller 42) to communicate its state of charge. This innovative approach eliminates the need for manual input of battery data during exchanges, allowing the system to automatically recognize and report the new battery's charge level in the software interface. The integration of the smart battery 38 signifies a leap forward in user experience and operational efficiency for the intruder detection system 10.

Further, the cameras 52 of the intruder detection system 10 are linked to the PCB (the controller 42) via a CSI interface, which, unlike some conventional systems that use Ethernet connections for off-the-shelf CCTV cameras, provides a more energy-efficient and fasterresponding surveillance solution. The cameras 52, detailed in FIG. 4, are primed for quick activation and energy conservation, which is advantageous relative to use of multiple processing units-one for each camera. The present system employs a single PCB and eliminates the need for individual camera processors.

The present intruder detection system 10 is adaptable to a tower type system having an extendable mast, as conceptualized for future iterations, in which the camera section 12 is mounted to the mast to rise to heights of 3 meters or more meters, rivaling traditional CCTV towers in surveillance capabilities while maintaining power efficiency and cost-effectiveness. The envisaged extension may include a lengthening of the connection between the camera section 12 and the lower section 16 components through a mast in the form of a telescopic (or otherwise) pole, underscoring the system's adaptability.

The inclusion of an infrared illuminator within the camera section 12 ensures night-time visibility without the necessity of activating the white floodlights 26, offering discreet surveillance and energy conservation.

The intruder detection system 10 is equipped with an advanced power management protocol that operates between two primary states: a low-power 'sleep' mode and an 'active' detection mode. In the sleep mode, the controller 42 conserves energy by minimizing the operational functions of the system's components, including the AI engine 44, processor 48, data storage 46, speaker 24, and the combined infrared illuminator and controllable light 33. During this state, the cameras 52 remain in a dormant condition, consuming minimal power which is vital for the system's energy efficiency, particularly when deployed in locations with limited solar energy availability.

Upon receiving a motion detection signal from the motion sensor 18, the controller 42 orchestrates a transition to the detection mode. This transition is executed with speed due to the customized design of the controller 42, which employs a quick-resume function akin to waking a personal computer from a suspended state. This rapid response allows the intruder detection system 10 to activate its security protocols in a timely manner.

In the detection mode, the controller 42 activates the processor 48 and the AI engine 44 based on a mode change signal issued by the controller 42, allocating more power to these components as they become operational. The AI engine 44 begins processing video data from the cameras 52, utilizing algorithms to analyze and classify movement within the system's surveillance field. This intelligent differentiation allows for distinguishing between potential human intruders and non-threatening movement, thereby reducing the occurrence of false alarms.

Concurrent with the activation of the AI engine 44, the cameras 52 are powered on by the controller 42. From a state of minimal power consumption, the cameras 52 become fully operational, ready to capture high-resolution video data. This data is relayed to the processor 48 for real-time analysis by the AI engine 44. The processor 48, being the central computing unit, manages the various operations, including data routing, initiation of recording sequences to the data storage 46, and executing the system's reactive measures.

If the AI engine 44, through its analysis, confirms a legitimate security threat, the system initiates a series of alert protocols. These include the activation of the speaker 24 to issue auditory warnings and/or the engagement of the combined infrared illuminator and controllable light 33, which may include strobe lights to visually deter the intruder. These reactive measures are governed by the controller 42, which sends a requisite change signal to each component based on the type of intrusion detected.

The controller 42 is programmed to respond to varying levels of threats with corresponding levels of alert and recording measures. For high-priority threats, as determined by the AI engine 44, the system may increase the power supplied to the speaker 24 for louder alerts, and to the combined infrared illuminator and controllable light 33 for more intense or varied strobe patterns. These features ensure the system's responsiveness is commensurate with the assessed threat level.

Furthermore, video data captured during a detected event is processed in real-time by the AI engine 44. This processing includes but is not limited to, motion vector analysis, pattern recognition, and object classification. Upon verification of a threat, the video data is stored in the data storage 46 with appropriate time-stamping, and/or may be simultaneously streamed for remote viewing or stored for subsequent review. The controller 42, with its integrated network interface 50, can transmit alerts and live video streams to designated monitoring stations or personnel, ensuring that real-time information is available for prompt security response.

The described power management and operational protocols of the intruder detection system 10 underline its ability to maintain vigilance and react dynamically to security breaches. By effectively balancing power conservation in sleep mode with robust, responsive action in detection mode, the system 10 sets a new standard for autonomous security and surveillance systems.

The invention has been described by reference to certain embodiments discussed above. It will be recognized that these embodiments are susceptible to various modifications and alternative forms well known to those of skill in the art.

Further modifications in addition to those described above may be made to the structures and techniques described herein without departing from the spirit and scope of the invention. Accordingly, although specific embodiments have been described, these are examples only and are not limiting upon the scope of the invention.

## Claims

1. An intruder detection system in a portable tower arrangement, the intruder detection system comprising:
a housing;
a battery included within the housing;
a motion sensor mounted to the housing;
a controller included within the housing;
a camera included in the housing; and
a controller configured to maintain a low power sleep mode in which the camera draws relatively little or no power from the battery, and to switch to a higher power detection mode when the motion sensor detects an intruder, the controller configured to activate the camera in the detection mode to capture video data.

2. The intruder detection system of claim 1, wherein the controller is configured to store video data in the detection mode.

3. The intruder detection system of claim 1 or 2, wherein the controller is configured to upload video data in the detection mode.

4. The intruder detection system of any preceding claim, wherein the controller includes an AI engine configured to classify human intruders.

5. The intruder detection system of claim 4, wherein the AI engine is activated in the detection mode and receives the video data in the detection mode.

6. The intruder detection system of any preceding claim, comprising an alarm system included on the housing and including at least of audible and visual alarms that are activated in response to an AI engine of the controller determining presence of an intruder,

7. The intruder detection system of any preceding claim, wherein the housing includes a lower section and an upper section that are at least one of: removable relative to one another and pivotable relative to one another.

8. The intruder detection system of claim 8, wherein the lower section includes the battery.

9. The intruder detection system of any preceding claim, wherein the housing comprises a lower section in the form of a truncated pyramid that narrows with height and an upper section in the for of a truncated pyramid that narrows towards the lower section.

10. The intruder detection system of claim 9, wherein each of four walls of the lower sections includes a solar panel, the solar panel including an arrangement of a plurality of vertically stacked tiles in each of a plurality of vertically arranged rows.

11. The intruder detection system of any preceding claim, comprising a plurality of legs for supporting the housing relative to ground and including a leg levelling adjustment system to ensure level operation of the intruder detection system including the motion sensor.

12. An intruder detection system, comprising:
a housing including a lower section and an upper section;
the lower section including a battery for powering an alarm system of the intruder detection system and at least one camera of the intruder detection system;
the upper section including at least one motion sensor;
the upper section having a hinge connection relative to the lower section so as to allow maintenance access to the lower section.

13. The intruder detection system of claim 12, wherein the lower section includes a solar panel for charging the battery.

14. The intruder detection system of claim 12 or 13, wherein the lower section is in the form of a truncated pyramid and the upper section is in the form of a truncated pyramid that is stacked upside down relative to the lower section.

15. The intruder detection system of claim 12, 13 or 14, comprising a controller configured to receive a motion detection signal from the motion sensor and to issue a mode change signal to the camera such that a sleep mode in changed to a detection mode.

16. The intruder detection system of claim 15, wherein an AI engine classifies video data captured by the camera in the detection mode to identify intrusion threats and wherein at least an audible and a visual aspect of the alarm system is activated when an intrusion threat is identified.

17. The intruder detection system of any one of claims 12 to 16, comprising a camera section that is modular and removably disposed on the upper section, the camera section comprising the camera and a controller for processing video data captured by the camera to identify an intruder, the controller configured to change power consumption modes in response to the at least one motion sensor.

18. The intruder detection system of any one of claims 12 to 17, wherein the hinge is gated to allow removal of the upper section relative to the lower section.

19. The intruder detection system of any one of claims 12 to 18, comprising a camera on each of four faces of the upper section to provide surround view.

20. The intruder detection system of any one of claims 12 to 19, comprising floodlighting, strobe lighting and/or speakers in the alarm system and to activate the alarm system in response to the controller processing video capturedThe by the camera.

21. The intruder detection system of any one of claims 12 to 20, wherein the lower section is associated with a leg levelling system and wherein tool interface features of the leg levelling system are accessible when the upper section is pivoted relative to the lower section.

22. The intruder detection system of any one of claims 12 to 21, comprising an infrared illuminator and wherein the camera has an infrared capture mode.

23. The intruder detection system of any one of claims 12 to 22, comprising a controller configured to process video data from the camera through an AI engine to detect an intruder, wherein the camera is dormant until a motion detection signal is confirmed by the controller based on an output of the motion sensor and a network interface configured to stream the video data to a cloud server in response to detection of the intruder.
